(19) Europäisches Patentamt
European Patent Office
Office européen des brevets

(11) **EP 2 200 242 A1**

(12) **EUROPEAN PATENT APPLICATION**

(43) Date of publication:
**23.06.2010 Bulletin 2010/25**

(51) Int Cl.:
*H04L 27/00* (2006.01)   *H04L 27/26* (2006.01)
*H04L 27/34* (2006.01)

(21) Application number: **09174394.8**

(22) Date of filing: **28.10.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **19.12.2008 KR 20080130650**

(71) Applicant: **Electronics and Telecommunications
Research
Institute
Daejeon 305-350 (KR)**

(72) Inventors:
• **Bae, Jae Hwui
305-770 Daejeon (KR)**

• **Kim, Young Su
301-760 Daejeon (KR)**
• **Lim, Jong Soo
301-831 Daejeon (KR)**
• **Song, Yun Jeong
305-759 Daejeon (KR)**
• **Lee, Soo In
302-120 Daejeon (KR)**

(74) Representative: **Betten & Resch
Patentanwälte
Theatinerstrasse 8
80333 München (DE)**

(54) **Method and device for transmitting modulation mode detection signal in hierarchically modulated terrestrial digital multimedia broadcasting system**

(57)    Provided is a method and device for transmitting a modulation mode detection signal in a hierarchically modulated terrestrial DMB system. The method summates a first signal input for a mobile broadcasting service and a second signal input for hierarchical modulation to detect a signal that is not hierarchically modulated, divides the summated signal into at least one signal by a predetermined time interval, inserts a sequence for encoding/decoding into the respective divided signals and summates them, and transmits the summated signal.

FIG. 3

**Description**

**BACKGROUND OF THE INVENTION**

**(a) Field of the Invention**

The present invention relates to a method and device for transmitting a modulation mode detecting signal in a hierarchically modulated terrestrial DMB system. Particularly, the present invention relates to a method and device for transmitting a modulation mode detection signal for a receiving terminal to efficiently detect a modulation method applied to a newly added signal and a hierarchical modulation coefficient when the hierarchical modulation is applied to the terrestrial DMB system so as to increase the channel data rate.

**(b) Description of the Related Art**

As the electronics and communication techniques have been substantially developed, various wireless communication services using wireless communication networks have been provided. Particularly, the digital multimedia broadcasting (DMB) service for receiving high-quality television and video without regard to location by using a mobile receiver such as a mobile communication terminal or a vehicle-installable receiver has been provided. The DMB service is classified as the satellite DMB (S-DMB) and the terrestrial DMB (T-DMB). The satellite DMB transmits DMB broadcasting signals to a receiver on the move by using a broadcasting satellite, and the terrestrial DMB transmits the DMB broadcasting signals to a receiver on the move by using a transmitter provided on the ground.
The terrestrial DMB uses a bandwidth of 1.5MHz, has a data rate of about 1Mbps, and provides a multimedia broadcasting service with common interleaved frame (CIF)-level image quality.
A greater channel data rate is required in order to change the QoS of the terrestrial DMB system into the SD level or increase the number of service channels, and accordingly, a mobile multimedia broadcasting system has a greater data rate compared to the same frequency bandwidth while maintaining backward compatibility with the existing terrestrial DMB system by introducing the hierarchical modulation to the terrestrial DMB system.
The hierarchical modulation method doubles the data rate to the maximum by adding a quadrature phase shift keying (QPSK) signal or a differential quadrature phase shift keying (DQPSK) modulation signal to the DQPSK signal used for data transmission in the existing terrestrial DMB system.
One DQPSK modulation method is used for the existing terrestrial DMB system, and at least one modulation method and hierarchical modulation coefficient can be used for the hierarchically modulated terrestrial DMB system. The hierarchically modulated terrestrial DMB system can have various modulation modes depending on the modulation method and the hierarchical modulation coefficient combination used,
**[0007]** The conventional terrestrial DMB system uses the DVB-H method or the MediaFLO method in order to detect the modulation method and the hierarchical modulation coefficient.
The DVB-H method represents the method for transmitting information on hierarchical modulation in the transmission parameter symbol (TPS), and in detail, when a transmitting terminal includes modulation method information in the 25-th and 26-th bits and hierarchical modulation information in the 27-th to 29-th bits from among the 68 bits and transmits them, a receiving terminal detects the modulation method and hierarchical modulation information by checking the transmission parameter symbol.
The MediaFLO method defines an additional orthogonal frequency division multiplexing (OFDM) symbol and inserts it into the data frame so as to transmit a modulation method, guard interval length, and hierarchical modulation information. The MediaFLO represents a method for transmitting information on the modulation mode through a time division multiplexing (TDM) pilot channel configured with one OFDM symbol and a signal parameter channel (SPC) configured with two OFDM symbol in a super frame.
However, in the hierarchically modulated terrestrial DMB system having various modulation modes depending on the combination of the modulation method and the hierarchical modulation coefficient, the receiving terminal cannot detect the hierarchical modulation coefficient through the DVB-H method. Also, when considering the backward compatibility with the existing terrestrial DMB system, it is impossible to add a new OFDM symbol for detecting the modulation method and the hierarchical modulation coefficient to the transmission signal so as to use the MediaFLO method.
Therefore, since it is impossible or difficult to detect the modulation method and hierarchical modulation coefficient of the newly added signal in the hierarchically modulated terrestrial DMB system, a method for the receiving terminal to efficiently detect the modulation method applied to the newly added signal and the hierarchical modulation coefficient is required.
The above information disclosed in this Background section is only for enhancement of understanding of the background of the invention and therefore it may contain information that does not form the prior art that is already known in this country to a person of ordinary skill in the art.

## SUMMARY OF THE INVENTION

The present invention has been made in an effort to provide a modulation mode detection signal transmitting method and device for a receiving terminal to efficiently detect the modulation method applied to the newly added signal and the hierarchical modulation coefficient in the hierarchical modulation terrestrial DMB system.

An exemplary embodiment of the present invention provides a method for transmitting a signal for detecting a modulation mode in a hierarchically modulated mobile broadcasting system, including: outputting a third signal by summating a first signal that is input for a mobile broadcasting service and a second signal that is input for hierarchical modulation; outputting a signal that is not hierarchically modulated from among the third signal as a fourth signal; dividing the fourth signal into at least one signal by a predetermined time interval, and inserting a sequence for encoding/decoding into the divided signals; and summating the sequence inserted at least one signal, and outputting the summated signal.

Another embodiment of the present invention provides a device for transmitting a signal for detecting a modulation mode in a hierarchically modulated mobile broadcasting system, including: a first signal processor for processing a first signal that is input for a mobile broadcasting service; a second signal processor for processing a second signal that is input for hierarchical modulation; and a sequence inserter for summating the first signal and the second signal, dividing the summated signal by a predetermined time interval, inserting a sequence for encoding/decoding into the divided at least one signal, and outputting the signal.

## BRIEF DESCRIPTION OF THE DRAWINGS

FIG. 1 shows a constellation of a terrestrial DMB signal to which the QAM modulation method is applied.

FIG. 2 shows a constellation of a terrestrial DMB signal to which the ADPSK modulation method is applied.

FIG. 3 shows a block diagram of a transmitting terminal of a hierarchically modulated terrestrial DMB system according to an exemplary embodiment of the present invention.

FIG. 4 shows a structure for adding a PN sequence to a PRS signal divided by time intervals.

FIG. 5 shows a structure for adding a plurality of different PN sequences to the PRS signal divided by time intervals.

FIG. 6 shows a flowchart of a method for transmitting a modulation mode detection signal according to an exemplary embodiment of the present invention.

## DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Throughout the specification, unless explicitly described to the contrary, the word "comprise" and variations such as "comprises" or "comprising" will be understood to imply the inclusion of stated elements but not the exclusion of any other elements.

In order to hierarchically modulate the terrestrial DMB system for increasing the channel data rate, the terrestrial DMB system generates a hierarchical modulation signal by adding a new low priority (LP) signal to an existing service providing signal (i.e., a high priority (HP) signal). Accordingly, the hierarchical modulation signal is expressed as shown in Equation 1.

$$\text{(Equation 1)}$$

$$S_H(n) = S_{hp}(n) + S_{lp}(n),$$

wherein $S_H(n)$ is a hierarchical modulation signal, $S_{hp}(n)$ is an HP signal, and $S_{lp}(n)$ is an LP signal.

In this instance, the LP signal $S_{lp}(n)$ must maintain the backward compatibility with the existing terrestrial DMB system, and for this purpose, the LP signal $S_{lp}(n)$ must be less than the HP signal $S_{hp}(n)$ by the hierarchical modulation coefficient so that it may less influence receipt of the existing terrestrial DMB signal. That is, the LP signal is defined according to the hierarchical modulation coefficient with respect to the HP signal.

The quadrature amplitude modulation (QAM) method using amplitude and phase modulation used by the DVB-H and MediaFLO or the amplitude differential phase shift keying (ADPSK) using the amplitude modulation is applicable to the LP signal.

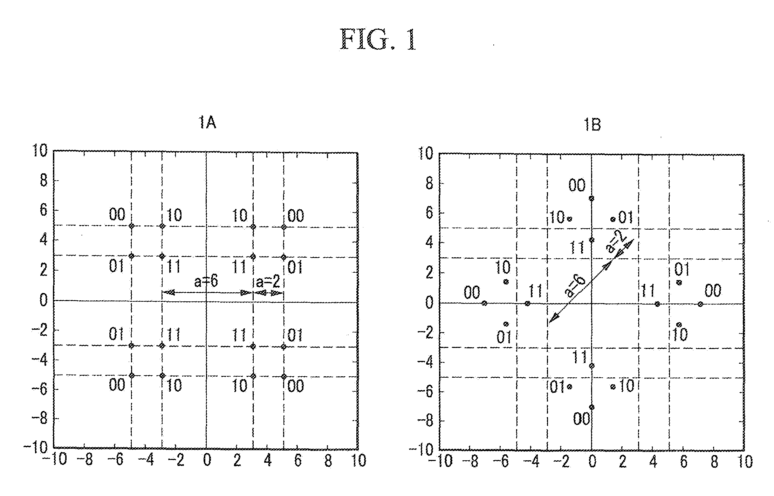

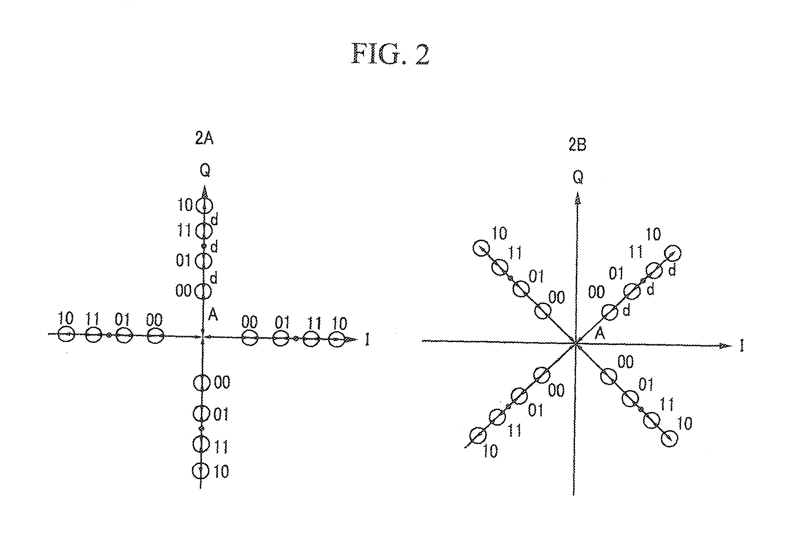

FIG. 1 shows a constellation of a terrestrial DMB signal to which the QAM modulation method is applied, and FIG. 2 shows a constellation of a terrestrial DMB signal to which the ADPSK modulation method is applied.

Here, FIG. 1A and FIG. 2A respectively show an odd symbol constellation of the terrestrial DMB signal, and FIG. 1B and FIG. 2B respectively show an even symbol constellation of the terrestrial DMB signal.

In FIG. 1, "a" represents the interval between the constellation groups of the terrestrial DMB signal, and "b" indicates the interval between the constellation groups of the terrestrial DMB signal. According to the exemplary embodiment of the present invention, the hierarchical modulation coefficient ($\alpha$) in the QAM modulation method shown in FIG. 1 can be expressed as in Equation 2.

(Equation 2)

$$\text{hierarchical modulation coefficient } (\alpha) = b/a$$

In FIG. 2, "A" is the interval from the center to the constellation group, and "d" is the interval between the constellations. The hierarchical modulation coefficient (p) in the ADPSK modulation as shown in FIG. 2 can be generated according to Equation 3.

(Equation 3)

$$\text{hierarchical modulation coefficient } (\mu) = A/d$$

Here, when applying the hierarchical modulation method to the LP signal, various modulation methods including the phase shift keying (PSK) type hierarchical modulation method using phase modulation in addition to the QAM method or the ADPSK method shown in FIG. 1 or FIG. 2 can be used.

In order for the receiving terminal to efficiently detect the modulation mode of the LP signal in the hierarchically modulated terrestrial DMB system, a pseudo-random number (PN) sequence that is not influenced by receipt of the terrestrial DMB signal is added in the time domain to a pseudo random sequence (PRS) signal to which no hierarchical modulation is applied in the hierarchically modulated terrestrial DMB system, thereby easily detecting the modulation mode of the LP signal.

For example, when there are 2 modulation methods applicable to the LP signal and there are 4 hierarchical modulation coefficient, the LP signal has 8 modulation modes.

In this case, the method for dividing the PRS signal by time intervals, adding a PN sequence thereto, and transmitting them, or the other method for adding 3 different PN sequences to the PRS signal with divided intervals and transmitting them, can be used.

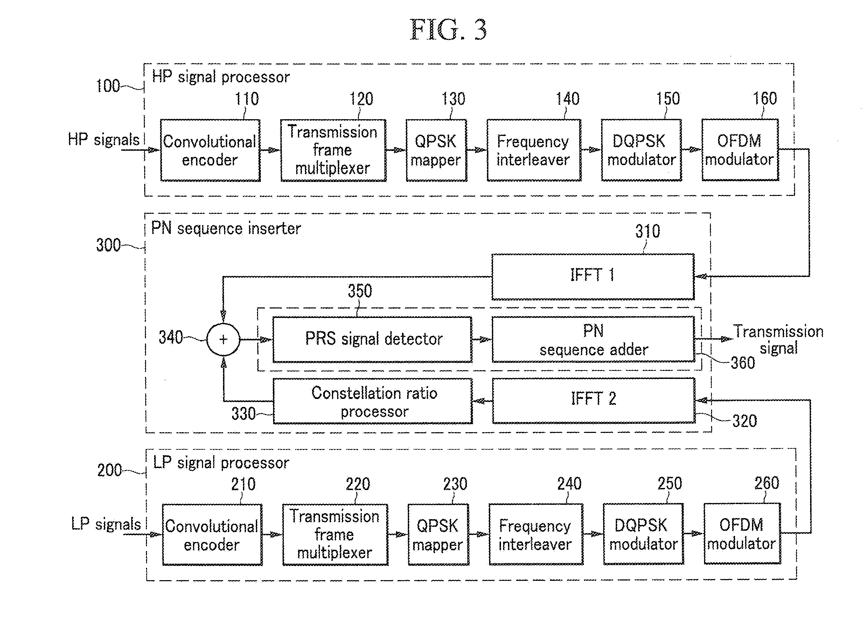

FIG. 3 shows a block diagram of a transmitting terminal of a hierarchically modulated terrestrial DMB system according to an exemplary embodiment of the present invention.

The configuration shown in FIG. 3 shows the configuration of inserting a PN sequence that is a modulation mode detection signal from among the transmitting terminal of the hierarchically modulated DMB system.

The transmitting terminal according to the exemplary embodiment of the present invention includes an HP signal processor 100 for processing an HP signal, an LP signal processor 200 for processing an LP signal, and a PN sequence inserter 300 for inserting a PN sequence.

The HP signal processor 100 includes a convolutional encoder 110 for correcting a bit error of the input HP signal using a convolution code, a transmission frame multiplexer 120 for multiplexing the HP signal, a QPSK mapper 130 for mapping the multiplexed HP signal for the QPSK, a frequency interleaver 140 for interleaving the mapped HP signal, a DQPSK modulator 150 for performing DQPSK on the interleaved HP signal for hierarchical modulation, and an orthogonal frequency division multiplexing (OFDM) modulator 160 for multiplexing the HP signal modulated by the DQPSK modulator 150.

In a like manner of the HP signal processor 100, the LP signal processor 200 includes a convolutional encoder 210 for correcting a bit error of the LP signal, a transmission frame multiplexer 220 for multiplexing the LP signal, a QPSK mapper 230 for mapping the multiplexed LP signal, a frequency interleaver 240 for interleaving the mapped LP signal, a DQPSK modulator 250 for performing DQPSK on the interleaved LP signal, and an OFDM modulator 260 for multiplexing the modulated LP signal.

The OFDM modulated HP signal output by the HP signal processor 100 and the OFDM modulated LP signal output by the LP signal processor 200 are input to the PN sequence inserter 300.

The PN sequence inserter 300 includes a first inverse fast Fourier transform (IFFT) unit 310, a second IFFT unit 320, a constellation ratio processor 330, a summator 340, a PRS signal detector 350, and a PN sequence adder 360.

The first IFFT unit 310 performs inverse fast Fourier transform on the OFDM applied HP signal transmitted by the HP signal processor 100 to convert the HP signal into a time-domain signal.

The second IFFT unit 320 performs inverse fast Fourier transform on the OFDM applied LP signal transmitted by the LP signal processor 200 to transform the LP signal into a time-domain signal.

The constellation ratio processor 330 reduces the signal output by the second IFFT unit 320 by the hierarchical modulation coefficient. That is, the constellation ratio processor 330 multiplies the signal output by the second IFFT unit 320 by the "1/hierarchical modulation coefficient ($\alpha$)."

The summator 340 summates the signal output by the first IFFT unit 310 and the signal output by the constellation ratio processor 330.

The PRS signal detector 350 detects the PRS signal that is a starting point of the data frame from the summated transmission signal. Here, since the HP signal and the LP signal that are transformed into the time-domain signals by the first IFFT unit 310 and the second IFFT unit 320 share the PRS signal that is the starting point of the data frame, the PRS signals of the signals summated by the summator 340 are the same.

The PN sequence adder 360 adds a PN sequence to the detected PRS signal. The PN sequence used for the PRS signal is used to encode the transmission signal at the transmitting terminal and decode the same at the receiving terminal. The transmission signal to which the PN sequence is added by the PN sequence adder 360 is output to a plurality of receiving terminals provided in the terrestrial DMB system.

Here, when adding the PN sequence to the PRS signal detected by the PRS signal detector 350, a method for dividing the PRS signal by time intervals and adding a PN sequence to them or another method for adding a plurality of different PN sequences to the PRS signal that are divided by the time intervals can be used.

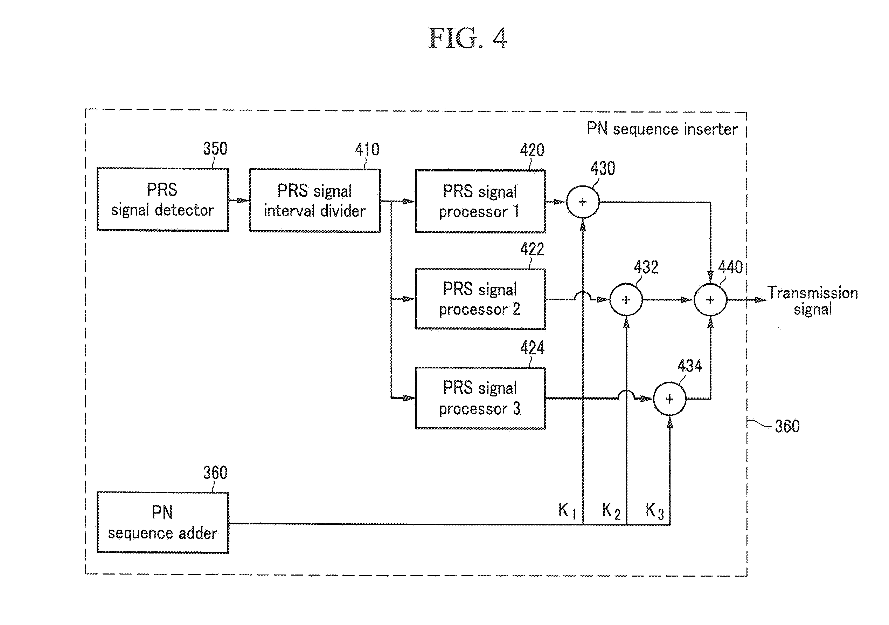

FIG. 4 shows a structure for adding a PN sequence to a PRS signal divided by time intervals.

The PN sequence inserter 300 for adding a PN sequence to the PRS signal includes a PRS signal detector 350, a PN sequence adder 360, a PRS signal interval divider 410, at least one PRS signal processor 420 to 424, and at least one summator 430 to 440.

FIG. 4 illustrates the configuration between the PRS signal detector 350 and the PN sequence adder 360 when a PRS signal is divided with 3 time intervals and a PN sequence is added to each of the PRS signals, and hence, 3 PRS signal processors and 4 summators are included.

The PRS signal interval divider 410 divides the PRS signal by the time intervals. In the PN sequence inserter 300 shown in FIG. 4, the PRS signal interval divider 410 divides the PRS signal by 3 time intervals. In this instance, the PRS signals divided by the PRS signal interval divider 410 will be called a first PRS signal, a second PRS signal, and a third PRS signal.

The PRS signal processors 420 to 424 receive and process the first PRS signal, the second PRS signal, and the third PRS signal divided by the PRS signal interval divider 410. The PRS signal processors 420 to 424 for respectively processing the first PRS signal, the second PRS signal, and the third PRS signal will be referred to as a first PRS signal processor 420, a second PRS signal processor 422, and a third PRS signal processor 424.

The first summator 430 to the third summator 434 respectively receive the PN sequence output by the PN sequence adder 360, and respectively insert the same into the first PRS signal to the third PRS signal output by the first PRS signal processor 420 to the third PRS signal processor 424.

Here, the PN sequence is multiplied to the PRS signal of the hierarchical modulation signal K times and is then added. In this instance, it is desirable for the PN sequence that is inserted into the PRS signal to have a value between 0 and 1 because the PN sequence must not influence demodulation of the HP signal.

Here, when the constant applicable to the PN sequence inserted into the first PRS signal is $K_1$, the constant applicable to the PN sequence inserted into the second PRS signal is $K_2$, and the constant applicable to the PN sequence inserted into the third PRS signal is $K_3$, $K_1$ to $K_3$ have the same value since they are output by the single PN sequence adder 360, and hence, it is satisfied that $K_1 = K_2 = K_3$.

The fourth summator 440 generates a modulation mode detection signal by summating the signals output by the first summator 430 to the third summator 434, and outputs the generated modulation mode detection signal to the receiving terminal.

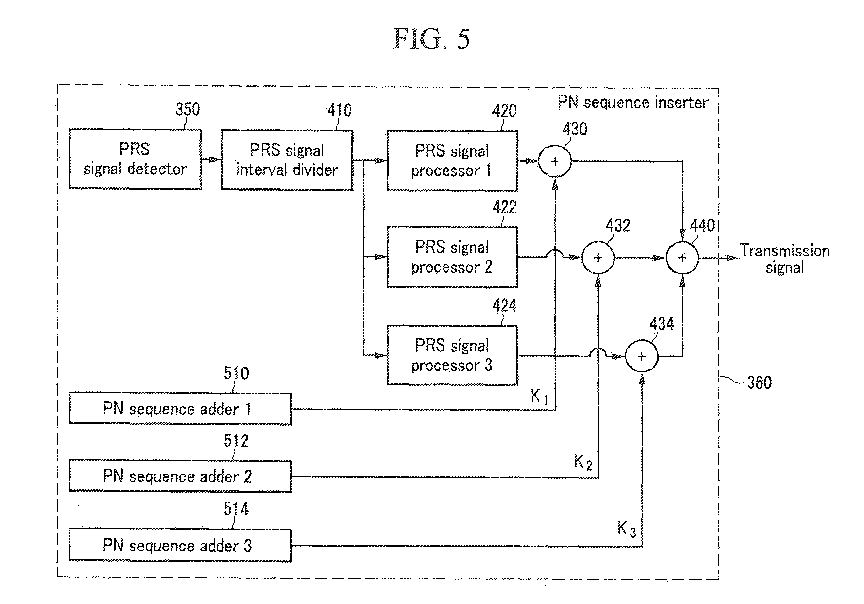

FIG. 5 shows a structure for adding a plurality of different PN sequences to the PRS signal divided by time intervals.

The PN sequence inserter 300 includes a PRS signal detector 350, a PRS signal interval divider 410, at least one PRS signal processor 420 to 424, at least one summator 430 to 440, and at least one PN sequence adder 510 to 514.

FIG. 5 illustrates a configuration of inserting a PN sequence into the PRS signals that are divided by 3 time intervals, and hence, the PN sequence inserter 300 includes three PRS signal processors, four summators, and three PN sequence adders.

The PRS signal interval divider 410 divides the PRS signal into a first PRS signal, a second PRS signal, and a third PRS signal.

The first PN sequence adder 510 generates a PN sequence to be inserted into the first PRS signal, and transmits the same to the first summator 430. In this instance, the PN sequence generated by the first PN sequence adder 510 will be called "the first PN sequence," and the constant applied to the first PN sequence will be called $K_1$.

The second PN sequence adder 512 generates the PN sequence to be inserted into the second PRS signal, and transmits the same to the second summator 432. In this instance, the PN sequence generated by the second PN sequence adder 512 will be called "the second PN sequence," and the constant applicable to the second PN sequence will be called $K_2$.

The third PN sequence adder 514 generates the PN sequence to be inserted into the third PRS signal, and transmits the same to the third summator 434. Here, the PN sequence generated by the third PN sequence adder 514 will be referred to as "the third PN sequence," and the constant applicable to the third PN sequence will be referred to as $K_3$.

The first PN sequence to the third PN sequence generated by the first PN sequence adder 510 to the third PN sequence adder 514 respectively have a value between 0 and 1, $K_1$ to $K_3$ can be set to have different values, they can be set to have the same value, or part of them can be set to have the same value. Accordingly, $K_1$ to $K_3$ have one of the following relations: $K_1 = K_2 = K_3$, $K_1 = K_2 \neq K_3$, $K_1 \neq K_2 = K_3$, $K_1 = K_3 \neq K_2$, or $K_1 \neq K_2 \neq K_3$.

The first PRS signal processor 420 to the third PRS signal processor 424 and the first summator 430 to the third summator 434 and the fourth summator 440 have the same functions as those described with reference to FIG. 4, and thus will not be described.

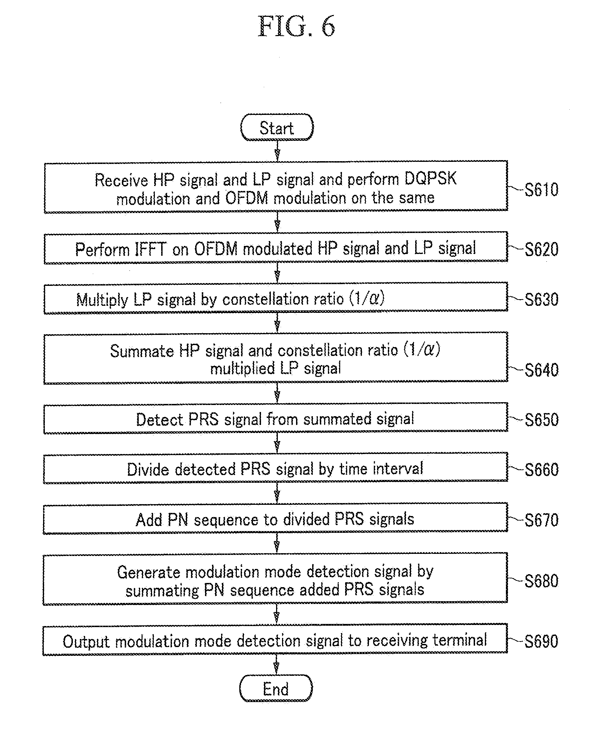

FIG. 6 shows a flowchart of a method for transmitting a modulation mode detection signal according to an exemplary embodiment of the present invention.

The transmitting terminal of the hierarchically modulated terrestrial DMB system receives the HP signal for the terrestrial DMB service and the LP signal for hierarchical modulation, and performs DQPSK and OFDM on the input HP signal and LP signal. For this purpose, the transmitting terminal performs error correction, multiplexing, mapping, and interleaving processes on the respective HP signal and the LP signal that are input through the HP signal processor 100 and the LP signal processor 200, and performs DQPSK and OFDM process on the interleaved HP signal and LP signal (S610).

When the OFDM modulated HP signal and LP signal are output, the signals undergo the inverse fast Fourier transform (S620). A predetermined constellation ratio that is the "1/hierarchical modulation coefficient($\alpha$)" is multiplied by the IFFT-performed LP signal to reduce its size (S630).

When the LP signal to which the IFFT is performed and the constellation ratio are multiplied and the HP signal to which the IFFT is performed are output, the two signals are summated (S640), and the PRS signal that is the starting point of the data frame is detected from the transmission signal (S650).

When the PRS signal is detected, the transmitting terminal divides it according to a predetermined time interval (S660). A PN sequence is added to the divided PRS signals so that the receiving terminal may easily detect the modulation mode of the LP signal.

In this instance, the same PN sequence can be added to the entire PRS signals, and different PN sequences can also be added to the PRS signals. Further, the PN sequence may not be inserted into a predetermined PRS signal (S670).

The transmitting terminal summates the PN sequence added to at least one PRS signal to generate a modulation mode detection signal (S680), and transmits the generated modulation mode detection signal to a plurality of receiving terminals as a transmission signal (S690).

Upon receiving the modulation mode detection signal from the transmitting terminal, the receiving terminal checks the PN sequence and the PRS signal to easily check the modulation method applied to the LP signal and the hierarchical modulation coefficient.

According to an embodiment of the present invention, when the transmission method according to the present invention is used in the hierarchically modulated mobile broadcasting system, the receiving terminal can easily detect the modulation method applied to the newly added signal.

Further, the data rate can be additionally improved by using a plurality of modulation methods to the mobile broadcasting system.

The above-described embodiments can be realized through a program for realizing functions corresponding to the configuration of the embodiments or a recording medium for recording the program in addition to through the above-described device and/or method, which is easily realized by a person skilled in the art.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

**Claims**

1. A method for transmitting a signal for detecting a modulation mode in a hierarchically modulated mobile broadcasting system, comprising:

   outputting a third signal by summating a first signal that is input for a mobile broadcasting service and a second signal that is input for hierarchical modulation;
   outputting a signal that is not hierarchically modulated from among the third signal as a fourth signal;
   dividing the fourth signal into at least one signal by a predetermined time interval, and inserting a sequence for encoding/decoding into the divided signals; and
   summating the sequence inserted at least one signal, and outputting the summated signal.

2. The method of claim 1, wherein
   the outputting of a signal includes
   detecting a pseudo random sequence (PRS) signal that is a starting point of a data frame from the third signal as a fourth signal.

3. The method of claim 1 or 2, wherein
   the dividing of the fourth signal includes
   inserting a sequence of the same value into the divided signals or inserting a sequence of a different value into the respective divided signals.

4. The method of claim 1 or 2, wherein
   the dividing of the fourth signal includes
   inserting a sequence having a predetermined value between 0 and 1 to the respective divided signals.

5. The method of claim 1 or 2, wherein
   the dividing of the fourth signal includes
   inserting a predetermined pseudo-random number (PN) sequence into the divided signals.

6. The method of one of claims 1 to 5, wherein
   the outputting of a third signal includes:

   receiving the first signal and the second signal;
   performing modulation for improving data rates of the first signal and the second signal;
   multiplexing the modulated first signal and the second signal;
   performing inverse fast Fourier transform (IFFT) on the multiplexed first signal and the second signal; and
   outputting the third signal by summating the IFFT-performed first signal and second signal.

7. The method of claim 6, wherein
   the outputting of the third signal includes
   multiplying the IFFT-performed second signal by a predetermined constellation ratio having a 1/hierarchical modulation coefficient; and
   outputting the third signal by summating the constellation ratio multiplied second signal and the IFFT-performed first signal.

8. The method of claim 6 or 7, wherein
   the performing of modulation includes
   performing differential quadrature phase shift keying (DQPSK) on the first signal and the second signal so as to improve the data rate.

9. The method of claim 6, 7 or 8, wherein
   the multiplexing of the modulated first signal includes
   performing orthogonal frequency division multiplexing (OFDM) on the modulated first signal and the second signal.

10. The method of one of claims 6 to 9, further including:

   correcting a bit error of the first signal and the second signal by using a convolution code;
   mapping the first signal and the second signal for quadrature phase shift keying (QPSK); and
   interleaving the mapped signal.

11. A device for transmitting a signal for detecting a modulation mode in a hierarchically modulated mobile broadcasting system, comprising:

   a first signal processor for processing a first signal that is input for a mobile broadcasting service;
   a second signal processor for processing a second signal that is input for hierarchical modulation; and
   a sequence inserter for summating the first signal and the second signal, dividing the summated signal by a predetermined time interval, inserting a sequence for encoding/decoding into the divided at least one signal, and outputting the signal.

12. The device of claim 11, wherein
   the sequence inserter includes:

   a signal detector for detecting a signal to which no hierarchical modulation is applied as a third signal from among the summated signal of the first signal and the second signal;
   a signal interval divider for dividing the third signal by a predetermined time interval; and
   a sequence adder for inserting a sequence for encoding/decoding the signal that is transmitted/received between a transmitting terminal and a receiving terminal of the mobile broadcasting system into at least one signal divided by the signal interval divider.

13. The device of claim 11 or 12, wherein
   the sequence adder inserts a sequence of the same value into the divided at least one signal or inserts sequences of different values into the divided at least one signal.

14. The device of claim 12 or 13, further including:

   a first summator for summating the first signal and the second signal and outputting the summated signal to the signal detector; and
   a second summator for summating the sequence inserted at least one signal and outputting the summated signal to the receiving terminal.

15. The device of claim 14, further including
   a constellation ratio processor for receiving the second signal from the second signal processor, multiplying the second signal by a predetermined constellation ratio, and transmitting the multiplied signal to the first summator, the constellation ratio having a value of a 1/hierarchical modulation coefficient.

# FIG. 1

EP 2 200 242 A1

FIG. 2

EP 2 200 242 A1

FIG. 3

**100** HP signal processor

HP signals → Convolutional encoder (110) → Transmission frame multiplexer (120) → QPSK mapper (130) → Frequency interleaver (140) → DQPSK modulator (150) → OFDM modulator (160)

**300** PN sequence inserter

IFFT 1 (310)

PRS signal detector (350)

PN sequence adder (360) → Transmission signal

Constellation ratio processor (330)

IFFT 2 (320)

(340) +

**200** LP signal processor

LP signals → Convolutional encoder (210) → Transmission frame multiplexer (220) → QPSK mapper (230) → Frequency interleaver (240) → DQPSK modulator (250) → OFDM modulator (260)

11

# FIG. 4

PN sequence inserter

PRS signal detector — 350

PRS signal interval divider — 410

PRS signal processor 1 — 420

PRS signal processor 2 — 422

PRS signal processor 3 — 424

430

432 — 440 → Transmission signal

434

360

PN sequence adder — 360

$K_1$ $K_2$ $K_3$

EP 2 200 242 A1

## FIG. 5

EP 2 200 242 A1

# FIG. 6

Start

Receive HP signal and LP signal and perform DQPSK modulation and OFDM modulation on the same — S610

Perform IFFT on OFDM modulated HP signal and LP signal — S620

Multiply LP signal by constellation ratio $(1/\alpha)$ — S630

Summate HP signal and constellation ratio $(1/\alpha)$ multiplied LP signal — S640

Detect PRS signal from summated signal — S650

Divide detected PRS signal by time interval — S660

Add PN sequence to divided PRS signals — S670

Generate modulation mode detection signal by summating PN sequence added PRS signals — S680

Output modulation mode detection signal to receiving terminal — S690

End

Europäisches
Patentamt
European
Patent Office
Office européen
des brevets

# EUROPEAN SEARCH REPORT

**Application Number**

EP 09 17 4394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/193244 A1 (LE GOFF DAVID [FR]) 31 August 2006 (2006-08-31) * abstract * * paragraph [0004] - paragraph [0007] * * paragraph [0029] - paragraph [0055] * * paragraph [0063] - paragraph [0083] * * figure 6 * | 1-15 | INV. H04L27/00 H04L27/26 H04L27/34 |
| A | DE BOT P ET AL: "An example of a multi-resolution digital terrestrial TV modem" PROCEEDINGS OF THE INTERNATIONAL CONFERENCE ON COMMUNICATIONS (ICC). GENEVA, MAY 23 - 26, 1993; [PROCEEDINGS OF THE INTERNATIONAL CONFERENCE ON COMMUNICATIONS (ICC)], NEW YORK, IEEE, US, vol. 3, 23 May 1993 (1993-05-23), pages 1785-1790, XP010137188 ISBN: 978-0-7803-0950-0 * abstract * * Sections 1-5 * | 1-15 | |

**TECHNICAL FIELDS SEARCHED (IPC)**

H04L

The present search report has been drawn up for all claims

| Place of search | Date of completion of the search | Examiner |
|---|---|---|
| The Hague | 26 March 2010 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 4394

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2010

| Patent document cited in search report | Publication date | Patent family member(s) | Publication date |
|---|---|---|---|
| US 2006193244 A1 | 31-08-2006 | CN 1839605 A<br>WO 2005020529 A1<br>JP 2007503734 T<br>KR 20060120602 A | 27-09-2006<br>03-03-2005<br>22-02-2007<br>27-11-2006 |

EPO FORM P0459

For more details about this annex : see Official Journal of the European Patent Office, No. 12/82